# EUROPÄISCHE PATENTSCHRIFT

(11) **EP 2 117 911 B1**
(45) Veröffentlichungstag und Bekanntmachung des Hinweises auf die Patenterteilung: **01.12.2010**
(21) Anmeldenummer: 08715515.6
(22) Anmeldetag: 26.02.2008
(51) Int. Cl.: B62D 35/00

(54) **LUFTLEITVORRICHTUNG FÜR EIN FAHRZEUG**
AIR-CONDUCTING APPARATUS FOR A VEHICLE
DISPOSITIF DÉFLECTEUR D'AIR POUR UN VÉHICULE

(30) Priorität: 09.03.2007 DE 102007011641
(43) Veröffentlichungstag der Anmeldung: 18.11.2009
(73) Patentinhaber: HS Genion GmbH, 82205 Gilching (DE)
(72) Erfinder: KANTOR, Alexander, 86899 Landsberg am Lech (DE)
(74) Vertreter: Grünberg, Thomas
(86) Internationale Anmeldenummer: PCT/DE2008/000323
(87) Internationale Veröffentlichungsnummer: WO 2008/110135

(56) Entgegenhaltungen:
- DE-A1- 2 649 953
- DE-A1- 4 207 658
- DE-A1- 10 063 581
- DE-A1- 10 309 369
- DE-A1-102006 011 512
- US-A1- 2006 043 769

## Beschreibung

Die Erfindung betrifft eine Luftleitvorrichtung für ein Fahrzeug nach dem Oberbegriff des Patentanspruchs 1.

Aus der Druckschrift DE 26 49 953 A1 ist eine derartige Luftleitvorrichtung für ein Fahrzeug bekannt, die im Übergangsbereich zwischen Dach und Heck als von der Fahrzeugaußenhaut abstehende, in Fahrzeugquerrichtung verlaufende und als Spoiler wirkende Profilleiste ausgebildet ist. Diese Profilleiste ist mittels einer Betätigungsmechanik zwischen einer eingefahrenen Ruhestellung und einer ausgestellten Betriebsstellung verstellbar. Die Betätigungsmechanik ist aus einer Mehrgelenkeinheit gebildet, die vier Lenker umfasst, von denen zwei nach Art einer Scherenmechanik über einen Drehpunkt miteinander verbunden sind und an einem Ende mit einem Bowdenzug verbunden sind und an den dem Bowdenzug abgewandten Enden gelenkig mit den beiden anderen Lenkern der Mehrgelenkeinheit verbunden sind, die wiederum im Bereich des Spoilerelements eine gemeinsame Schwenkachse haben. Bei einer Betätigung des Bowdenzugs werden die beiden Lenker der Scherenmechanik betätig, wodurch ein Hub des Spoilerelements erfolgt.

Aus der DE 103 09 369 A1, die den Oberbegriff des Anspruchs 1 bildet, ist eine Luftleitvorrichtung mit einem Spoilerelement bekannt, das mittels einer Betätigungsmechanik zwischen einer eingefahrenen Ruhestellung und einer ausgestellten Betriebsstellung verstellbar ist. Die Betätigungsmechanik umfasst eine parallelogrammartige Viergelenkanordnung mit zwei Schwenklenkern, die jeweils mit einem Ende karosseriefest angelenkt sind und mit ihren anderen Enden an einem oberen Träger angelenkt sind, der mittelbar oder unmittelbar das Spoilerelement untergreift und abstützt. Auf einen der Schwenklenker wirkt ein Antriebsgestänge, das ein von einem Elektromotor angetriebenes Kurbelteil und ein zwischen dem Kurbelteil und dem betreffenden Schwenklenker angeordnetes Kopplungsteil umfasst. Bei einer Betätigung des Antriebsmotors wird das Kurbelteil verschwenkt. Diese Schwenkbewegung wird mittels des Kopplungsteils auf die Viergelenkmechanik übertragen, so dass das Spoilerelement je nach Schwenkrichtung und Ausgangsstellung des Kurbelteils entweder eingefahren oder ausgeschwenkt wird. Durch eine Viergelenkanordnung können aber die bisweilen geforderten Anstellwinkel und Hubwerte für das Spoilerelement ohne Verletzung von Stabilitätskriterien und/oder Bauraumkriterien nicht erreicht werden. Auch ist ein Unterströmschutz bei einer derartigen Luftleitvorrichtung nur mit einer separaten oder sehr aufwändigen Kinematik darstellbar.

Der Erfindung liegt die Aufgabe zugrunde, eine Luftleitvorrichtung zu schaffen, bei der bei gegebener Grundkonstruktion durch einfache konstruktive Maßnahmen ein gewünschter maximaler Anstellwinkel und ein gewünschter maximaler Hub des Spoilerelementes vorgegeben und so eine einfache Anpassung an unterschiedliche Anforderungen erreicht werden kann.

Diese Aufgabe ist erfindungsgemäß durch die Luftleitvorrichtung mit den Merkmalen des Patentanspruchs 1 gelöst.

Der Kern der Erfindung besteht mithin darin, dass eine Mehrgelenkeinheit vorgesehen ist, die eine Scherenmechanik umfasst, die aus mindestens zwei über einen Drehpunkt miteinander verbundenen Schwenklenkem gebildet ist und die bei Betätigung einer Antriebseinrichtung einen Hub und ein Verschwenken des Spoilerelementes bewirkt. Durch Anpassung der jeweiligen, beidseits des Drehpunkts angeordneten Schenkel und der Steuerelemente an die gestellten Anforderungen hinsichtlich Hub und Anstellwinkel des Spoilerelementes kann die Scherenmechanik in einfacher Weise unter Beibehaltung ihres Grundaufbaus den jeweiligen Anforderungen entsprechend ausgelegt werden. Eine Längenänderung der Schenkel der Schwenklenker bzw. Schwingen und/oder eine Änderung der Steuerelemente führt zu einer Änderung des maximalen Anstellwinkels und des maximalen Hubs des Spoilerelementes. Des Weiteren kann durch Einsatz einer Scherenmechanik im Vergleich zu einer als parallelogrammartiges Viergelenk ausgebildeten Mehrgelenkeinheit ein beträchtlich größerer Hub erreicht werden.

Die Luftleitvorrichtung, die mittels der Scherenmechanik aus- bzw. eingefahren werden kann, kann insbesondere als sogenannter Heckspoiler ausgebildet sein, der heckseitig eines Fahrzeugheckfensters in eine Fahrzeugkarosserie integriert ist. Insbesondere in diesem Fall umfasst die Betätigungsmechanik des Heckspoilers zwei Mehrgelenkeinheiten, die jeweils in einem seitlichen Endbereich des sich in Fahrzeugquerrichtung erstreckenden Spoilerelementes angeordnet sind und jeweils eine Scherenmechanik umfassen, die über eine Antriebseinrichtung angetrieben ist. Für beide Mehrgelenkeinheiten kann ein gemeinsamer Antriebsmotor, wie ein Elektromotor, vorgesehen sein.

Bei der Luftleitvorrichtung nach der Erfindung ist ein erster Schwenklenker der Scherenmechanik mit einem Schenkel bzw. Ende karosseriefest angelenkt und mit seinem anderen Schenkel bzw. Ende über ein erstes Steuerelement mit dem Spoilerelement verbunden, wohingegen der zweite Schwenklenker mit einem Schenkel bzw. Ende an dem Spoilerelement angelenkt ist und mit seinem anderen Schenkel bzw. Ende über ein zweites Steuerelement mit einem karosseriefesten Abschnitt verbunden ist. Als Schenkel der Schwenklenker werden im vorliegenden Fall die jeweils beidseits des Drehpunkts angeordneten Bereiche der einzelnen Schwenklenker bezeichnet. Die beiden Steuerelemente legen in Kombination mit dem betreffenden, angrenzenden Schenkel des jeweiligen Schwenklenkers den maximalen Hub und den maximalen Anstellwinkel des Spoilerelementes fest.

Bei einer speziellen Ausfikrungsfiorm der Luftleitvorrichtung nach der Erfindung ist das erste, dem ersten Schwenklenker zugeordnete Steuerelement ein Steuerlenker, der zwischen dem ersten Schwenklenker und dem Spoilerelement angeordnet ist. Die Länge des Steuerlenkers in Kombination mit dem angrenzenden Schenkel des ersten Schwenklenkers bestimmt im Wesentlichen den maximalen Anstellwinkel des Spoilerelementes.

Denkbar ist es aber auch, das erste Steuerelement als Steuerkulisse auszubilden, die spoilerelementfest beispielsweise an einem Träger für das Spoilerelement vorgesehen ist. Die Form der Steuerkulisse, in der das angrenzende Ende des betreffenden Schwenklenkers geführt ist, bestimmt dann im Wesentlichen den maximalen Anstellwinkel des Spoilerelementes.

Entsprechend kann auch das zweite, dem zweiten Schwenklenker zugeordnete Steuerelement als Lenker bzw. Steuerlenker ausgebildet sein, der zwischen dem zweiten Schwenklenker und dem karosseriefesten Abschnitt angeordnet ist. Die Länge dieses Steuerlenkers und dessen Anlenkpunkt an dem karosseriefesten Abschnitt bestimmen im Wesentlichen den maximalen Hub des Spoilerelementes.

Alternativ ist es auch hier denkbar, dass das zweite Steuerelement aus einer karosseriefesten Steuerkulisse gebildet ist, in der der zweite Schwenklenker mit seinem betreffenden Ende geführt ist.

Bei einer zweckmäßigen Ausführungsform der Luftleitvorrichtung nach der Erfindung umfasst die Antriebseinrichtung für die Mehrgelenkmechanik eine Lenkeranordnung, die einen mit einem Antriebsmotor verbundenen Kurbellenker und einen mit dem Kurbellenker verbundenen Koppellenker umfasst, der an dem karosseriefest angelenkten Schwenklenker der Scherenmechanik angelenkt ist. Eine derartige Antriebseinrichtung ist mit geringem Bauraumbedarf in einen Spoileraufbau integrierbar und bei einer speziellen Ausführungsform so auslegbar, dass in der maximal ausgefahrenen Stellung des Spoilerelementes eine Strecklage zwischen dem Kurbellenker und dem Koppellenker vorliegt, so dass eine stabile, ausgestellte Endlage des Spoilerelementes gewährleistet ist. Durch die Strecklage oder auch eine Übertotpunktlage, in der ein Gelenkbereich zwischen dem Kurbellenker und dem Koppellenker an einem Anschlag anliegen kann, ist mithin das Spoilerelement in seiner ausgefahrenen Stellung gesichert, so dass eine auftretende Windlast von der Lenkeranordnung aufgenommen wird.

Bei der Luftleitvorrichtung nach der Erfindung kann ein Unterströmschutzelement vorgesehen sein, das anströmseitig insbesondere an dem zweiten Schwenklenker fixiert ist. Das Unterströmelement, das mithin an einem fahrzeugbugseitigen Bereich der Luftleitvorrichtung angeordnet ist, schließt einen Spalt zwischen dem vorderseitigen Rand des Spoilerelementes und der Fahrzeugkarosserie, so dass das Auftreten störender Windgeräusche im Bereich der Luftleitvorrichtung minimiert ist.

Weitere Vorteile und vorteilhafte Ausgestaltungen des Gegenstandes der Erfindung sind der Beschreibung, der Zeichnung und den Patentansprüchen entnehmbar.

Ausführungsbeispiele der Luftleitvorrichtung sind in der Zeichnung schematisch vereinfacht dargestellt und werden in der nachfolgenden Beschreibung näher erläutert. Es zeigt
- Fig. 1: eine perspektivische Heckansicht eines Kraftfahrzeugs mit einem Heckspoiler;
- Fig. 2: eine erste perspektivische Seitenansicht einer Betätigungs- mechanik des Heckspoilers bei abgesenktem Spoilerelement;
- Fig. 3: eine zweite Seitenansicht der Betätigungsmechanik bei ab- gesenktem Spoilerelement;
- Fig. 4: eine Fig. 2 entsprechende Ansicht, jedoch in einer Zwischen- stellung des Spoilerelementes;
- Fig. 5: eine Fig. 3 entsprechende Ansicht, jedoch in einer Zwischen- stellung des Spoilerelementes;
- Fig. 6: eine Fig. 2 entsprechende Ansicht, jedoch in einer maximal ausgestellten Stellung des Spoilerelementes;
- Fig. 7: eine Fig. 3 entsprechende Ansicht, jedoch in einer maximal ausgestellten Stellung des Spoilerelementes;
- Fig. 8: eine Außenansicht der Betätigungsmechanik;
- Fig. 9: eine Innenansicht der Betätigungsmechanik;
- Fig. 10: eine Seitenansicht einer Betätigungsmechanik eines erfin- dungsgemäß ausgebildeten Heckspoilers im ausgestellten Zustand für eine erste Auswahl von maximalen Hub- und An- stellwinkelwerten;
- Fig. 11: eine Seitenansicht einer weiteren Ausführungsform für eine zweite Auswahl von maximalen Hub- und Anstellwinkelwer- ten;
- Fig. 12: eine Seitenansicht einer dritten Ausführungsform für eine drit- te Auswahl von maximalen Hub- und Anstellwinkelwerten; und
- Fig. 13: eine Seitenansicht einer weiteren Ausführungsform, jedoch für eine vierte Auswahl von maximalen Hub- und Anstellwin- kelwerten.

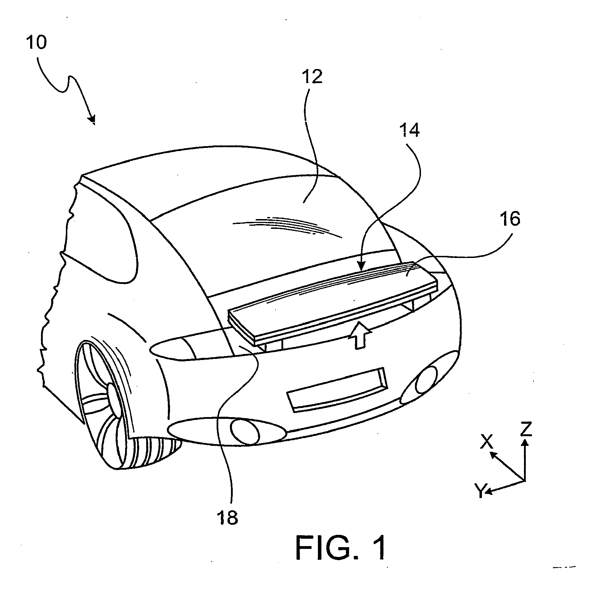

In Fig. 1 ist ein Kraftfahrzeug 10 dargestellt, das heckseitig unterhalb einer Heckscheibe 12 eine einen Heckspoiler darstellende Luftleitvorrichtung 14 aufweist. Die Luftleitvorrichtung 14 umfasst ein sich im Wesentlichen in Fahrzeugquerrichtung erstreckendes Spoilerblatt bzw. Spoilerelement 16, das mittels einer beidseits angeordneten Ausstellkinematik zwischen einer in einer heckseitigen Karosseriemulde 18 angeordneten Ruhestellung und einer ausgestellten Betriebsstellung, die eine aerodynamisch wirksame Position darstellt, verfahrbar ist.

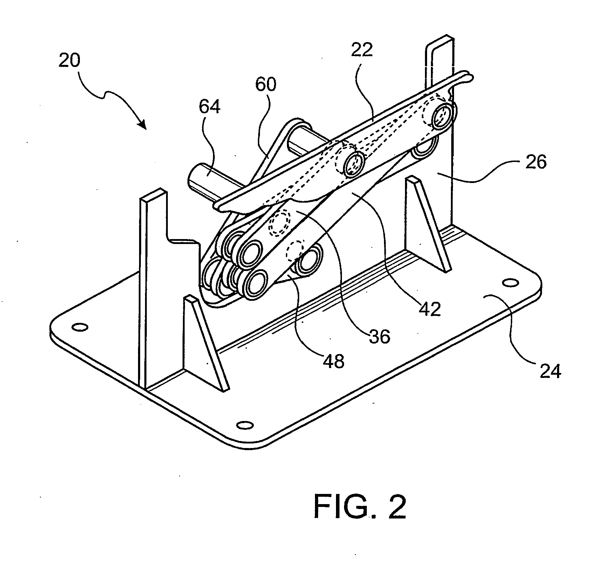

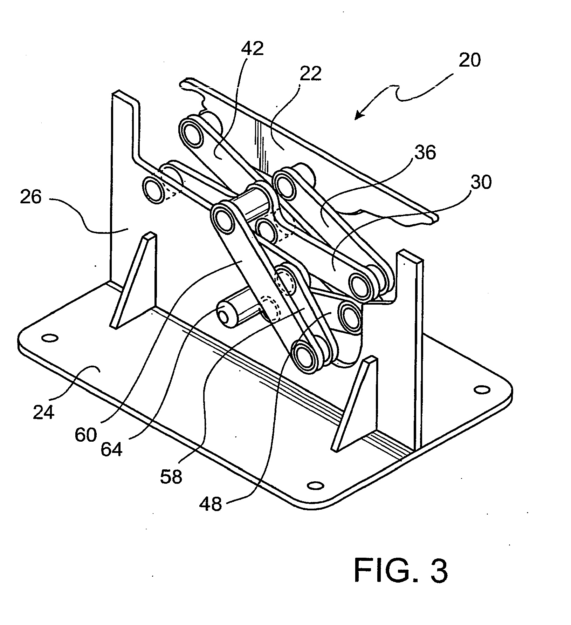

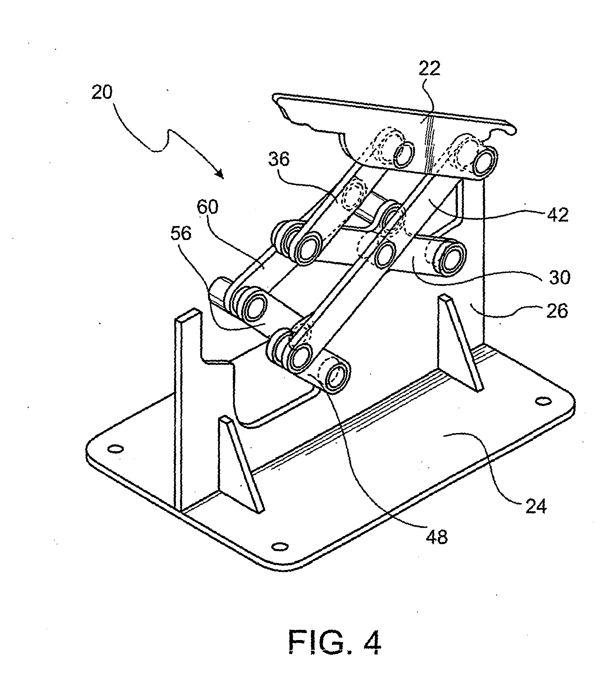

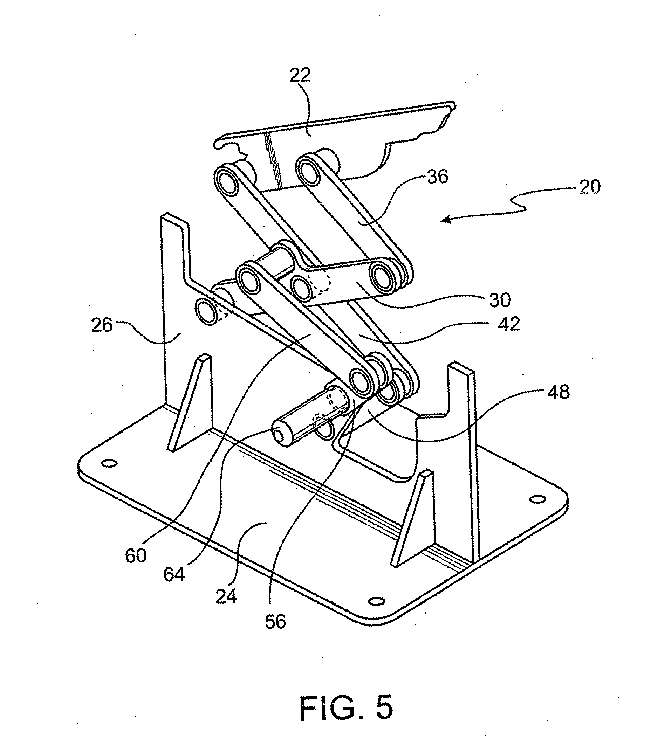

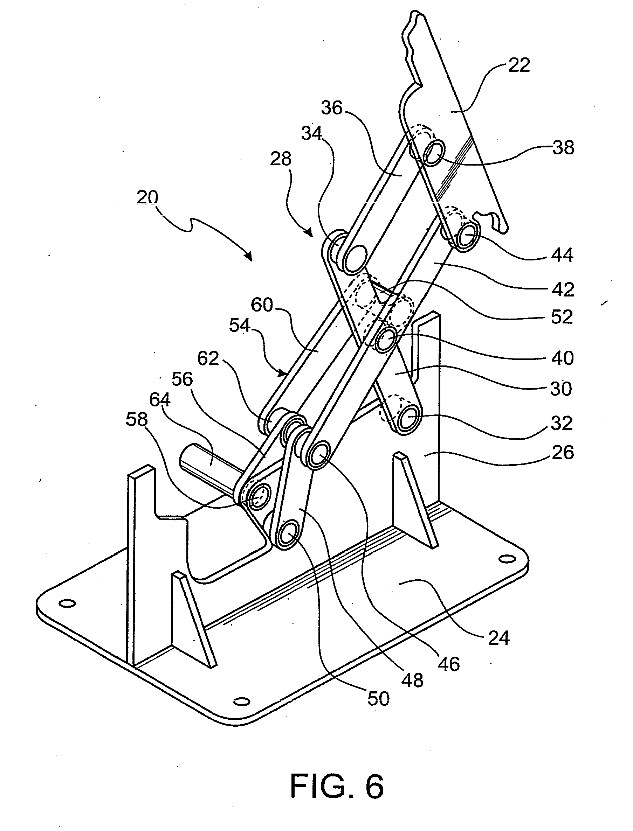

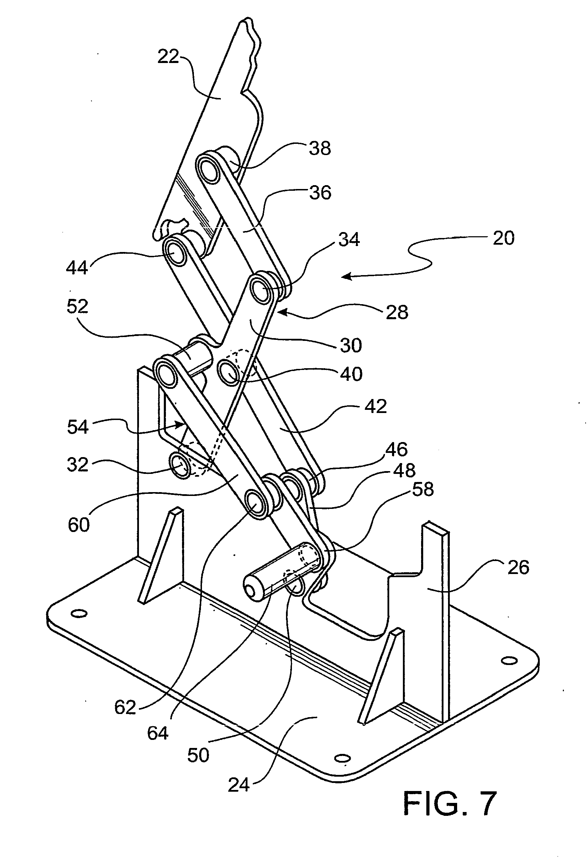

Die Ausstellkinematik zum Ausfahren des Spoilerblatts 16 umfasst beidseits symmetrisch bezüglich einer Fahrzeuglängsmittelebene jeweils eine in den Figuren 2 bis 9 dargestellte Mehrgelenkmechanik 20, die mittels eines hier nicht näher dargestellten Elektromotors antreibbar ist und an der das Spoilerelement 16 über einen Träger 22 fixiert ist.

Die Mehrgelenkmechanik 20 umfasst einen karosseriefest ausgebildeten Lagerblock 24, der eine in vertikaler Richtung ausgerichtete Lagerplatte 26 umfasst, an der eine Scherenmechanik 28 gelagert ist, die mit dem Träger 22, an dem das Spoilerelement 16 fixiert ist, verbunden ist.

Die Scherenmechanik 28 umfasst einen ersten Schwenklenker 30, der über ein Gelenk 32 an der Lagerplatte 26 karosseriefest angelenkt ist und an seinem dem Gelenk 32 abgewandten Ende über ein Gelenk 34 mit einem Steuerlenker 36 verbunden ist, der wiederum über ein Gelenk 38 an dem Träger 22 für das Spoilerelement 16 angelenkt ist.

Über ein Drehgelenk bzw. einen Drehpunkt 40, der den Schwenklenker 30 in einen dem Gelenk 32 zugeordneten Schenkel und einen dem Gelenk 34 zugeordneten Schenkel unterteilt, ist der Schwenklenker 30 mit einem zweiten Schwenklenker 42 verbunden, der über ein Gelenk 44 mit dem Träger 22 für das Spoilerelement 16 verbunden ist und an dessen dem Gelenk 44 abgewandten Ende über ein Gelenk 46 ein zweiter Steuerlenker 48 angelenkt ist, der an seinem dem Gelenk 46 abgewandten Ende über ein weiteres Gelenk 50 an der vertikalen Lagerplatte 26 des Lagerblocks 24 angelenkt ist. Das Drehgelenk 40 unterteilt den Schwenklenker 42 in einen dem Gelenk 44 zugeordneten Schenkel und in einen dem Gelenk 46 zugeordneten Schenkel.

An dem ersten Schwenklenker 42 greift über ein Schwenklager 52 eine Lenkeranordnung 54 an, die einer Antriebseinrichtung zugeordnet ist und einen sogenannten Kurbellenker 56, der über ein Gelenk 58 ebenfalls an der Lagerplatte 26 des Lagerblocks 24 drehbar gelagert ist, und einen Koppellenker 60, der über ein Drehgelenk 62 mit dem Kurbellenker 56 verbunden ist und an dem Schwenklager 52 des ersten Schwenklenkers 42 angreift.

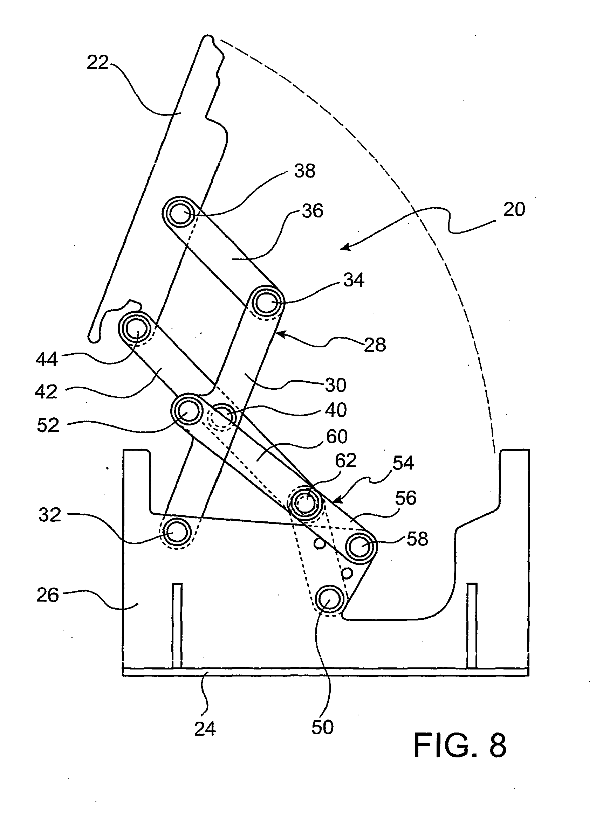

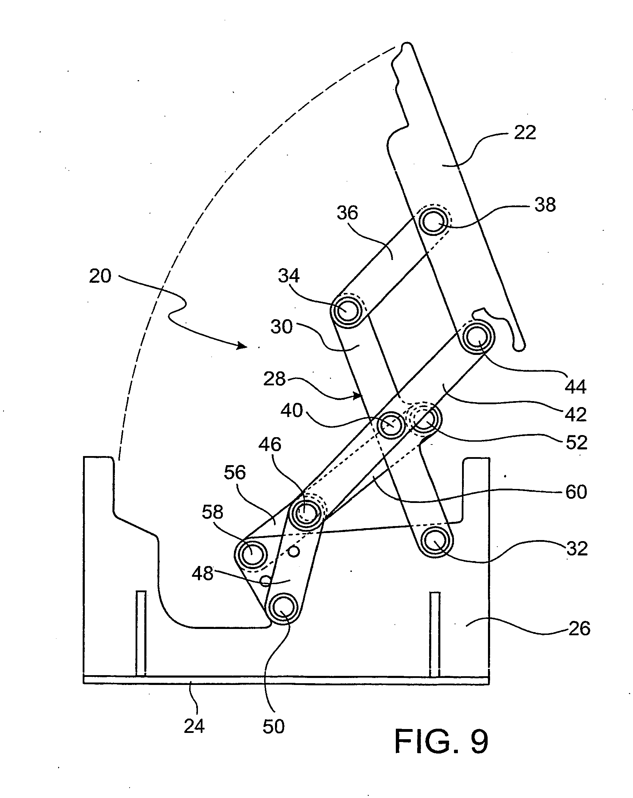

Im Bereich des Gelenks 58 ist der Kurbellenker 56 mit einer Antriebswelle 64 verbunden, die zu dem Elektromotor führt. Zum Ausstellen des Spoilerelements 16 wird der Kurbellenker 56 mittels der Antriebswelle 64 ausgehend von der der Ruhestellung des Spoilerelements 16 zugeordneten Position verschwenkt, bis der Kurbellenker 56 und der Koppellenker 60, der die Schwenkbewegung auf die Scherenmechanik 28 überträgt, eine Strecklage zueinander einnehmen. Diese Strecklage sichert das Spoilerelement 16 in seiner Betriebsstellung, so dass dieses nicht durch die Windlast niedergedrückt werden kann. Der Bewegungspfad des Spoilerelements 16 bzw. des Trägers 22 für das Spoilerelement 16 beim Ausstellen bzw. Einfahren ist in den Figuren 8 und 9 anhand gestrichelter Linien dargestellt.

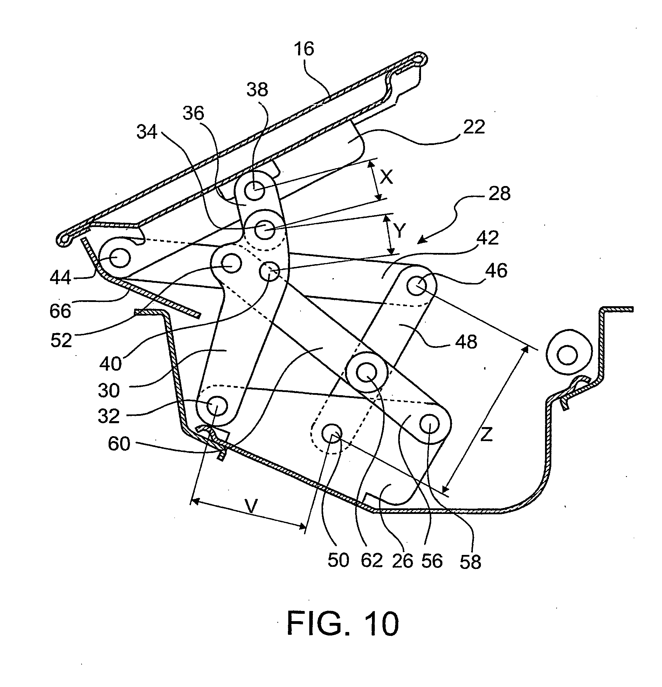

Der maximale Hub und der maximale Anstellwinkel des Spoilerelementes 16 sind durch entsprechende Auslegung der Steuerlenker 36 und 48 und der jeweils zugeordneten Schenkel der sich kreuzenden Schwenklenker 30 und 42 sowie durch die Position des Gelenks 50 an der Lagerplatte 26 festgelegt. Unterschiedliche Auslegungen dieser Parameter sind in den Figuren 10 bis 13 dargestellt.

Bei der Ausführungsform nach Fig. 10 hat der erste Steuerlenker 36 eine Länge, die einem Abstand X zwischen dem Gelenk 38 und dem Gelenk 34 von 13 mm entspricht. Die Länge des dem Gelenk 34 zugeordneten Schenkels des Schwenklenkers 30 ist so gewählt, dass ein Abstand Y zwischen dem Gelenk 34 und dem Drehgelenk 40, der den Schwenklenker 30 mit dem Schwenklenker 42 verbindet, ebenfalls 13 mm beträgt.

Der Steuerlenker 48 hat eine Länge, die so gewählt ist, dass der Abstand Z zwischen dem Gelenk 46 und dem Gelenk 50 53 mm beträgt. Ein Abstand V zwischen dem Gelenk 32 des Schwenklenkers 30 an der Lagerplatte 26 und dem Gelenk 50 beträgt 35,8 mm. Der sich hieraus ergebende maximale Anstellwinkel des Spoilerelementes 16 beträgt 28°. Der maximale Hub zwischen der eingefahrenen Ruhestellung und der ausgefahrenen Betriebsstellung beträgt 24 mm.

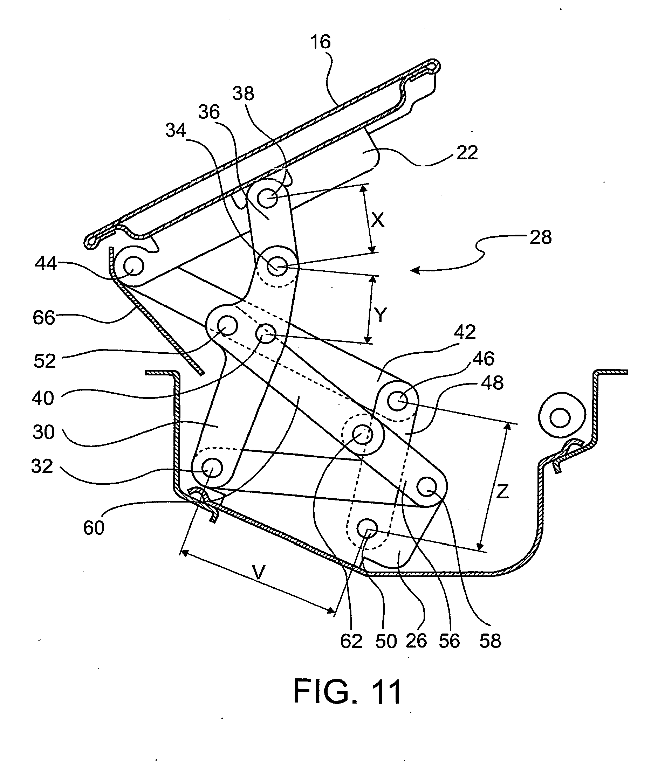

Bei der Ausführungsform nach Fig. 11 beträgt der Abstand X 21,4 mm, der Abstand Y ebenfalls 21,4 mm, der Abstand Z 40,9 mm und der Abstand V 50,2 mm. Die übrigen Abmessungen und Auslegungen des Heckspoilers entsprechen denjenigen der Ausführungsform nach Fig. 10. Jedoch ergibt sich mit Änderung lediglich der Parameter X, Y, Z und V ein maximaler Anstellwinkel des Spoilerelementes 16 von 28° und ein maximaler Hub des Spoilerelementes von 40 mm.

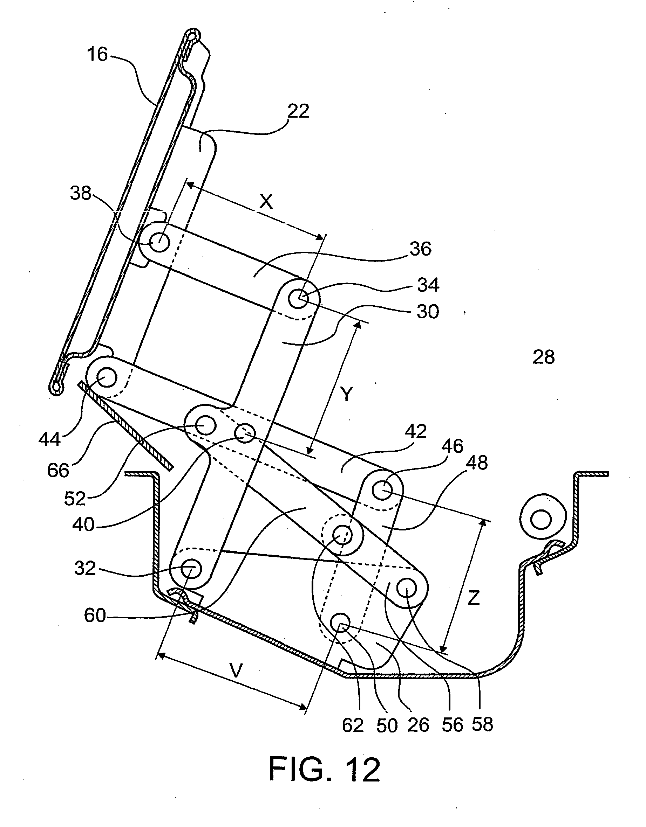

Bei der Ausführungsform nach Fig. 12, deren Grundkonstruktion wiederum im Wesentlichen derjenigen der Ausführungsform nach Fig. 10 entspricht, hat der Abstand X einen Wert von 45 mm, der Abstand Y ebenfalls einen Wert von 45 mm, der Abstand Z einen Wert von 43,1 mm und der Abstand V einen Wert von 47,4 mm. Durch diese Auslegung der Parameter X, Y, Z und V kann bei ansonsten gegenüber den Ausführungsformen nach den Figuren 10 und 11 unveränderter Konstruktion ein maximaler Anstellwinkel des Spoilerelements 16 von 70° und ein maximaler Hub des Spoilerelements von 24 mm erreicht werden.

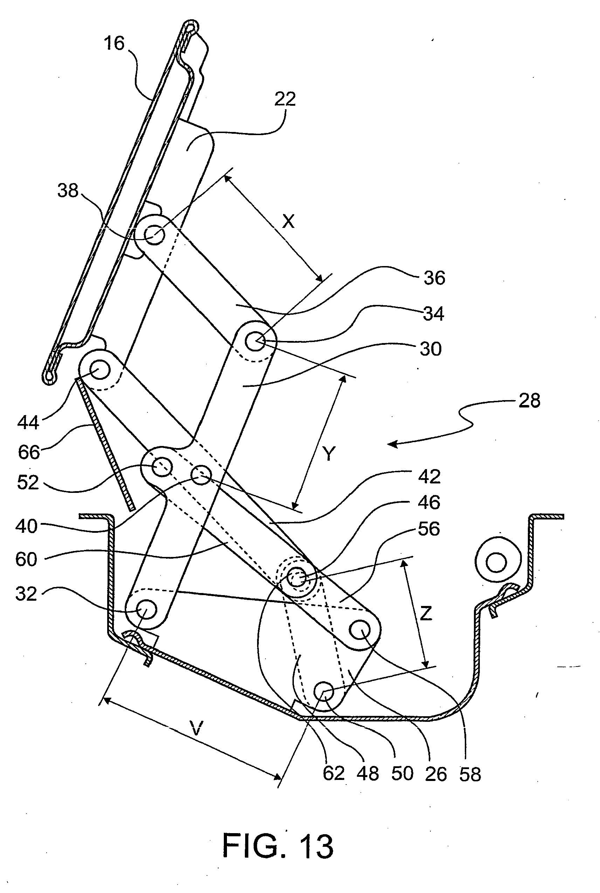

Bei der Ausführungsform nach Fig. 13, deren Grundkonstruktion ebenfalls derjenigen der Ausführungsform nach Fig. 10 entspricht, hat der Abstand X einen Wert von 45 mm, der Abstand Y einen Wert von 45 mm, der Abstand Z einen Wert von 34,9 mm und der Abstand V einen Wert von 59,3 mm. Hieraus ergibt sich bei ansonsten gegenüber den Ausführungsformen nach den Figuren 10 bis 12 unveränderten Bauelementen ein maximaler Anstellwinkel des Spoilerelementes 16 von 70° und ein maximaler Hub des Spoilerelementes 16 von 40 mm.

Wie anhand der Ausführungsformen nach den Figuren 10 bis 13 erkennbar ist, lassen sich bei der erfindungsgemäß ausgebildeten Luftleitvorrichtung ausgehend von einer Grundkonstruktion allein durch entsprechende Auslegung der Steuerlenker 36 und 48 sowie die Länge des dem Gelenk 34 zugeordneten Schenkels des Schwenkhebels 30 sowie durch die Position des Gelenks 50 an der Lagerplatte 26 der maximale Anstellwinkel des Spoilerelementes 16 und der maximale Hub des Spoilerelementes 16 festlegen. Es ist somit eine einfache Anpassung an unterschiedliche Anforderungen hinsichtlich maximaler Anstellwinkel und maximaler Hub bei gleich bleibender Grundkonstruktion möglich.

Bei den Ausführungsformen nach den Figuren 10 bis 13 ist des Weiteren jeweils ein Unterströmschutzelement 66 vorgesehen, das im Bereich des Gelenks 44 an dem Schwenklenker 42 fixiert ist und das sich entsprechend der Schwenkbewegung des Schwenklenkers 42 gegenüber dem Spoilerelement 16 verschwenkt. Das Unterströmschutzelement 66 ist ein starres, plattenförmiges Bauteil, das flatterfrei an dem Schwenklenker 42 befestigt ist. Zum Positionieren des Unterströmschutzelementes 66 in dessen Wirkstellung ist keine weitere Kinematik erforderlich. Beim Ausstellen des Spoilerelements 16 verschwenkt sich das Unterströmschutzelement 66 zusammen mit dem Schwenklenker 42.

### Bezugszeichen

- 10: Kraftfahrzeug
- 12: Heckfenster
- 14: Heckspoiler
- 16: Spoilerelement
- 18: Karosseriemulde
- 20: Mehrgelenkmechanik
- 22: Träger
- 24: Lagerblock
- 26: Lagerplatte
- 28: Scherenmechanik
- 30: Schwenklenker
- 32: Gelenk
- 34: Gelenk
- 36: Steuerlenker
- 38: Gelenk
- 40: Drehgelenk
- 42: Schwenklenker
- 44: Gelenk
- 46: Gelenk
- 48: Steuerlenker
- 50: Gelenk
- 52: Schwenklager
- 54: Lenkeranordnung
- 56: Kurbellenker
- 58: Gelenk
- 60: Koppellenker
- 62: Drehgelenk
- 64: Antriebswelle
- 66: Unterströmschutzelement

## Patentansprüche

1. Luftleitvorrichtung (14) für ein Fahrzeug (10), umfassend mindestens ein Spoilerelement (16), sowie eine Betätigungsmechanik, wobei das Spoilerelement mittels der Betätigungsmechanik zwischen einer eingefahrenen Ruhestellung und einer ausgestellten Betriebsstellung verstellbar ist, wobei die Betätigungsmechanik mindestens eine verschwenkbare Mehrgelenkeinheit (20) umfasst, die mittels einer Antriebseinrichtung antreibbar ist, mit dem Spoilerelement (16) verbunden ist und eine Scherenmechanik (28) umfasst, die beim Betätigen der Antriebseinrichtung einen Hub des Spoilerelementes (16) bewirkt und aus mindestens zwei über einen Drehpunkt (40) miteinander verbundenen Schwenklenkem (30, 42) gebildet ist, **dadurch gekennzeichnet, dass** die Scherenmechanik (28) beim Betätigen der Antriebseinrichtung neben dem Hub ein Verschwenken des Spoilerelements (16) bewirkt und dass ein erster Schwenklenker (30) mit einem Ende karosseriefest anlenkbar ist und mit seinem anderen Ende über ein erstes Steuerelement (36) mit dem Spoilerelement (16) verbunden ist und ein zweiter Schwenklenker (42) mit einem Ende an dem Spoilerelement (16) angelenkt ist und mit seinem anderen Ende über ein zweites Steuerelement (48) mit einem karosseriefesten Abschnitt verbindbar ist.

2. Luftleitvorrichtung nach Anspruch 1, **dadurch gekennzeichnet, dass** das erste Steuerelement (36) ein Steuerlenker ist, der zwischen dem ersten Schwenklenker (30) und dem Spoilerelement (16) angeordnet ist.

3. Luftleitvorrichtung nach Anspruch 1 oder 2, **dadurch gekennzeichnet, dass** das zweite Steuerelement (48) ein Steuerlenker ist, der zwischen dem zweiten Schwenklenker (42) und dem karosseriefesten Abschnitt angeordnet ist.

4. Luftleitvorrichtung nach Anspruch 1 oder 2, **dadurch gekennzeichnet, dass** das zweite Steuerelement aus einer karosseriefesten Steuerkulisse gebildet ist, in der das betreffende Ende des zweiten Schwenklenkers fixiert ist.

5. Luftleitvorrichtung nach einem der Ansprüche 1 bis 4, **dadurch gekennzeichnet, dass** die Antriebseinrichtung eine Lenkeranordnung (54) umfasst, die mit einem Antriebsmotor verbunden ist und einen Kurbellenker (56) und einen mit dem Kurbellenker (56) verbundenen Koppellenker (60) umfasst, der an dem karosseriefest angelenkten Schwenklenker (30) der Scherenmechanik (28) angelenkt ist.

6. Luftleitvorrichtung nach Anspruch 5, **dadurch gekennzeichnet, dass** eine Strecklage zwischen dem Kurbellenker (56) und dem Koppellenker (60) einer stabilen ausgestellten Endlage des Spoilerelementes (16) zugeordnet ist.

7. Luftleitvorrichtung nach einem der Ansprüche 1 bis 6, **gekennzeichnet durch** ein Unterströmschutzelement (66), das anströmseitig an dem zweiten Schwenklenker (42) fixiert ist und ein Unterströmen des Spoilerelements (16) im Wesentlichen verhindert.

## Claims

1. Air-conducting apparatus (14) for a vehicle (10), comprising at least one spoiler element (16) and an actuating mechanism, wherein the spoiler element can be adjusted between a retracted inoperative position and a deployed operative position by means of the actuating mechanism, wherein the actuating mechanism comprises at least one pivotable multi-joint unit (20) which can be driven by means of a driving device, is connected to the spoiler element (16) and comprises a scissors-type mechanism (28) which, upon actuation of the driving device, brings about lifting of the spoiler element (16) and is formed from at least two pivot links (30, 42) connected to each other via a pivot point (40), **characterized in that**, upon actuation of the driving device, the scissors-type mechanism (28) brings about pivoting of the spoiler element (16) in addition to the lifting, and **in that** a first pivot link (30) can be coupled at one end so as to be fixed on the bodywork and is connected at the other end thereof via a first control element (36) to the spoiler element (16), and a second pivot link (42) is coupled at one end to the spoiler element (16) and can be connected at the other end thereof via a second control element (48) to a section fixed on the bodywork.

2. Air-conducting apparatus according to Claim 1, **characterized in that** the first control element (36) is a control link which is arranged between the first pivot link (30) and the spoiler element (16).

3. Air-conducting apparatus according to Claim 1 or 2, **characterized in that** the second control element (48) is a control link which is arranged between the second pivot link (42) and the section fixed on the bodywork.

4. Air-conducting apparatus according to Claim 1 or 2, **characterized in that** the second control element is formed from a slotted control arm which is fixed on the bodywork and in which the relevant end of the second pivot link is fixed.

5. Air-conducting apparatus according to one of Claims 1 to 4, **characterized in that** the driving device comprises a link arrangement (54) which is connected to a driving motor and comprises a crank link (56) and a coupling link (60) which is connected to the crank link (56) and is coupled to that pivot link (30) of the scissors-type mechanism (28) which is coupled so as to be fixed on the bodywork.

6. Air-conducting apparatus according to Claim 5, **characterized in that** an extended position between the crank link (56) and the coupling link (60) is associated with a stable, deployed end position of the spoiler element (16).

7. Air-conducting apparatus according to one of Claims 1 to 6, **characterized by** an underflow protection element (66) which is fixed to the second pivot link (42) on the approach-flow side and substantially prevents flow under the spoiler element (16).

## Revendications

1. Dispositif de guidage d'air (14) pour un véhicule (10), comprenant au moins un élément déflecteur (16) ainsi qu'un mécanisme d'actionnement, l'élément déflecteur pouvant être déplacé au moyen du mécanisme d'actionnement entre une position de repos rentrée et une position fonctionnelle sortie, le mécanisme d'actionnement comprenant au moins une unité à articulations multiples pivotante (20), qui peut être entraînée au moyen d'un dispositif d'entraînement, qui est connectée à l'élément déflecteur (16) et qui comprend un mécanisme de cisaillement (28), qui, lors de l'actionnement du dispositif d'entraînement, provoque un levage de l'élément déflecteur (16) et est formé d'au moins deux bras pivotants (30, 42) connectés l'un à l'autre par le biais d'un centre (40), **caractérisé en ce que** le mécanisme de cisaillement (28), lors de l'actionnement du dispositif d'entraînement, provoque, en plus du levage, un pivotement de l'élément déflecteur (16) et **en ce qu'**un premier bras pivotant (30) peut être articulé fixement à la carrosserie par une extrémité et est connecté par le biais d'un premier élément de commande (36) à l'élément déflecteur (16) par son autre extrémité, et un deuxième bras pivotant (42) est articulé par une extrémité à l'élément déflecteur (16) et par son autre extrémité par le biais d'un deuxième élément de commande (48) à une portion fixée à la carrosserie.

2. Dispositif de guidage d'air selon la revendication 1, **caractérisé en ce que** le premier élément de commande (36) est un bras de commande qui est disposé entre le premier bras pivotant (30) et l'élément déflecteur (16).

3. Dispositif de guidage d'air selon la revendication 1 ou 2, **caractérisé en ce que** le deuxième élément de commande (48) est un bras de commande qui est disposé entre le deuxième bras pivotant (42) et la portion fixée à la carrosserie.

4. Dispositif de guidage d'air selon la revendication 1 ou 2, **caractérisé en ce que** le deuxième élément de commande est formé d'une coulisse de commande fixée à la carrosserie, dans laquelle est fixée l'extrémité concernée du deuxième bras pivotant.

5. Dispositif de guidage d'air selon l'une quelconque des revendications 1 à 4, **caractérisé en ce que** le dispositif d'entraînement comprend un agencement de bras (54) qui est connecté à un moteur d'entraînement et qui comprend un bras de manivelle (56) et un bras d'accouplement (60) connecté au bras de manivelle (56) et articulé au bras pivotant (30) du mécanisme de cisaillement (28) articulé de manière fixe à la carrosserie.

6. Dispositif de guidage d'air selon la revendication 5, **caractérisé en ce qu'**une position d'étendue entre le bras de manivelle (56) et le bras d'accouplement (60) est associée à une position de fin de course stable sortie de l'élément déflecteur (16).

7. Dispositif de guidage d'air selon l'une quelconque des revendications 1 à 6, **caractérisé par** un élément de protection contre un flux inférieur (66), qui est fixé du côté de l'afflux au deuxième bras pivotant (42) et qui empêche essentiellement un écoulement en dessous de l'élément déflecteur (16).
